(19) Europäisches Patentamt
European Patent Office
Office européen des brevets

(11) **EP 3 591 833 B1**

(12) **EUROPEAN PATENT SPECIFICATION**

(45) Date of publication and mention of the grant of the patent:
**16.02.2022 Bulletin 2022/07**

(21) Application number: **18181325.4**

(22) Date of filing: **03.07.2018**

(51) International Patent Classification (IPC):
**H02P 6/185** (2016.01)      **H02P 6/18** (2016.01)
**H02P 21/18** (2016.01)

(52) Cooperative Patent Classification (CPC):
**H02P 6/185; H02P 6/183; H02P 21/18**

(54) **METHOD FOR IDENTIFYING THE MAGNETIC ANISOTROPY OF AN ELECTRIC ROTARY FIELD MACHINE**

VERFAHREN ZUR IDENTIFIZIERUNG DER MAGNETISCHEN ANISOTROPIE EINER ELEKTRISCHEN DREHFELDMASCHINE

PROCÉDÉ PERMETTANT D'IDENTIFIER L'ANISOTROPIE MAGNÉTIQUE D'UNE MACHINE À CHAMP TOURNANT ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2020 Bulletin 2020/02**

(73) Proprietor: **Danfoss Power Electronics A/S**
**6300 Gråsten (DK)**

(72) Inventor: **ERB, Stefan**
**6430 Nordborg (DK)**

(74) Representative: **Patentanwälte Olbricht Buchhold Keulertz**
**Partnerschaft mbB**
**Bettinastraße 53-55**
**60325 Frankfurt am Main (DE)**

(56) References cited:
**EP-A2- 2 290 807      WO-A1-2004/023639**
**WO-A2-2009/136381      US-A1- 2010 295 491**

**Description**

The present invention relates to a method for identifying the magnetic anisotropy of an electric rotary field machine comprising a rotor and a stator, the method comprising the steps of setting injection pulses of equal absolute values during an injection interval, detecting a respective current response in form of current difference vectors, and determining the anisotropy from the voltage vectors and current difference vectors.

Such a method is known, for example, from WO 2017/045810 A1. EP2290807 A2 discloses another method: When applying a high frequency voltage which alternates on positive and negative sides to a permanent magnet synchronous motor, a driving system of synchronous motor switches the applied voltage phase by 120 degrees successively and applies resultant voltages to three phases. A pulsating current generated by applying a high frequency voltage is detected at timing of elapse of a predetermined time since an output voltage of at least one phase has changed from a state in which all output voltages of the three phases of a power converter are positive or negative. A magnetic pole estimation unit calculates the rotor magnetic pole position of the permanent magnet synchronous motor on the basis of differences between positive side and negative side change quantities in three-phase currents obtained from detected current values.

WO2004023639 A1 discloses another drive system for a three phase brushless motor uses an algorithm for position sensing which measures the inductance in the motor phases and determines the position from the measured inductances. In order to reduce acoustic noise, the inductances are measured during test periods, which are conducting states added to the PWM pattern in each PWM period. The test periods have net voltage of zero and therefore do not affect the output of the motor, but are sufficiently long to allow inductance measuring as well as the use of a single current sensor for current sensing.

Such a method requires a number of calculation operations, in particular multiplications, which are time consuming and require a corresponding large calculating power.

The object underlying the invention is to have a simple way of identifying the magnetic anisotropy of an electric rotary field machine.

This object is solved with a method as defined in claim 1.

The use of injection pulses in the three-phase domain uses in principle three vectors (or multiples of three vectors) forming a closed triangle. Accordingly, only three measurements are necessary. The electric rotary field machines can be synchronous motors and induction motors and the method can be used for the sensorless control of these machines.

According to the invention the current difference vectors are demodulated using a three-phase rotation matrix. With the single vector components of the injection pulses forming a closed ring in form of a triangle, the demodulated current differences are not influenced by the isotropic component but do only reflect the rotor anisotropy, which is the relevant part for the rotor angle detection.

According to the invention the three-phase rotation matrix comprises only values of $\pm 1$ and $\pm 1/2$. This leads to a mathematical simplification of the super imposed vector, and allows the anisotropy vector components to be calculated without any multiplications, but only by summing terms and/or shift operations.

According to the invention the three-phase rotation matrix is in form of

$$\begin{pmatrix} \cos(\varphi) & \cos(\varphi - \frac{4\pi}{3}) & \cos(\varphi - \frac{2\pi}{3}) \\ \cos(\varphi - \frac{2\pi}{3}) & \cos(\varphi) & \cos(\varphi - \frac{4\pi}{3}) \\ \cos(\varphi - \frac{4\pi}{3}) & \cos(\varphi - \frac{2\pi}{3}) & \cos(\varphi) \end{pmatrix}$$

Choosing the right angle for $\varphi$, this leads to the values $\pm 1$ and $\pm 1/2$, mentioned above.

In an embodiment of the invention the number of voltage vectors in the three-phase domain is n x 3, wherein n is a positive integer. Accordingly, n can be 1, 2, 3 or higher. It is, for example, also possible to use a sequence of six injection vectors of the same magnitude but with different orientations which allows to construct a high frequency carrier.

In an embodiment of the invention n is chosen depending on a predetermined error $e_{max}$

$$n = \frac{f_{sw}}{3 * f_{out}} e_{max}$$

wherein $f_{out}$ is an output frequency of the rotor and $f_{sw}$ is the modulation frequency. In this way it can be achieved that the method becomes more accurate the slower the rotor moves.

In an embodiment of the invention the voltage vectors and the current difference vectors in three-phase domain are determined using an electronic hardware circuit or a programmable logic device. In both solutions the necessary calculation power can be provided, however, without the need to have too much calculation power. Accordingly, the electronic hardware circuit or the programmable logic device can be kept small.

The invention relates furthermore to a non-volatile computer readable medium as defined in claim 5.

The invention will be described in more details with reference to the drawing, wherein:

Fig. 1    shows a schematic illustration of a triangle or 3-pulse injection method,

Fig. 2    shows a hexagon or 6-pulse method and

Fig. 3    shows an example for 6-pulse method using two triangles.

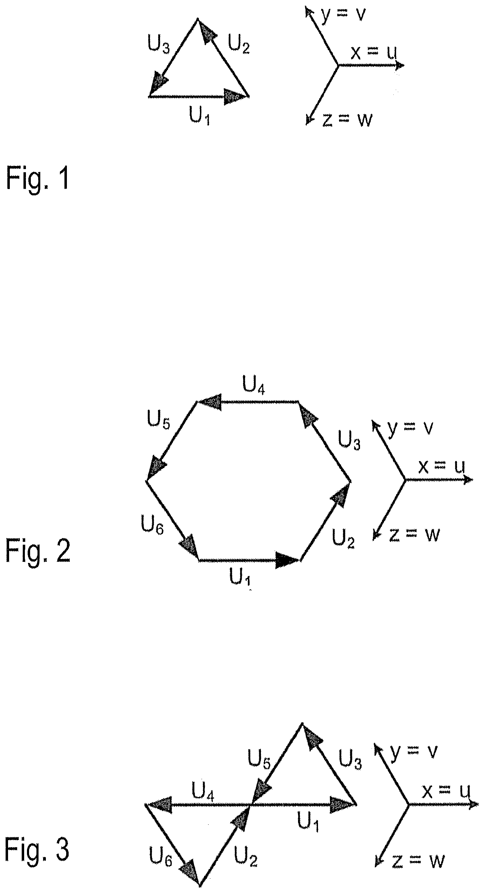

The magnetic anisotropy of a motor (or general an electric rotary field machine comprising a rotor and a stator) can be detected by measuring the change of the stator current Is caused by a stator voltage $U_S$ during a short time interval called injection period. By repeating the measurements using different vector directions, the direction of the anisotropy can be determined. Assuming that the dynamic of a field oriented control (FOC) is sufficiently slow, i.e. the FOC output is almost constant over one triangle period, the superposition of 3-injection vectors as shown in fig. 1 makes the total sum return to the starting point without disturbing the FOC. Measuring the current differences caused by the different injections however allows to reconstruct the anisotropy of the motor.

As shown in fig. 1, the three single vector components of the injection triangle form a closed ring of voltages $U_1$, $U_2$, $U_3$ and the demodulated current differences are not influenced by the isotropic component but do only reflect the rotor anisotropy, which is the relevant part for rotor angle detection.

The analysis of current differences using a rotating injection offers the advantage of observing motor anisotropy independently from the FOC generated voltage. The high frequency injection may typically revolve at e.g. 2fsw/3 (one injection per modulation half period) or fsw/3 (one injection per modulation period) and is demodulated, so that each one of the three injection vectors $U_1$, $U_2$, $U_3$ contributes to the measurement of the anisotropy components.

The present invention allows a mathematical simplification of the superimposed vectors. As, for mathematical simplicity, it is convenient to represent the injection voltages and current differences using three-phase vectors in term of the phases U, V, and W.

$$U_1 = u_{inj} \begin{pmatrix} 1 \\ 0 \\ 0 \end{pmatrix} , \; U_2 = u_{inj} \begin{pmatrix} 0 \\ 1 \\ 0 \end{pmatrix}, \; U_3 = u_{inj} \begin{pmatrix} 0 \\ 0 \\ 1 \end{pmatrix}$$

where $u_{inj}$ is the injection magnitude. The measured phase current differences $\Delta I_{uvw}$ from the rotating injection vectors are subsequently demodulated using a three-phase rotation matrix

$$\Delta I_{xyz} = \begin{pmatrix} \cos(\varphi) & \cos(\varphi - \frac{4\pi}{3}) & \cos(\varphi - \frac{2\pi}{3}) \\ \cos(\varphi - \frac{2\pi}{3}) & \cos(\varphi) & \cos(\varphi - \frac{4\pi}{3}) \\ \cos(\varphi - \frac{4\pi}{3}) & \cos(\varphi - \frac{2\pi}{3}) & \cos(\varphi) \end{pmatrix} \cdot \Delta I_{uvw}$$

For three different injection voltages $U_1$, $U_2$, and $U_3$ and the injection voltages arranged in the triangle shown in fig. 1, the corresponding matrix results

$$U_1 \; (\varphi = 0):$$

$$\Delta I_{xyz1} = \begin{bmatrix} 1 & -1/2 & -1/2 \\ -1/2 & 1 & -1/2 \\ -1/2 & -1/2 & 1 \end{bmatrix} \Delta I_{uvw1} \quad \rightarrow \quad \begin{aligned} 2\Delta I_{x1} &= +2\Delta I_{u1} - \Delta I_{v1} - \Delta I_{w1} \\ 2\Delta I_{y1} &= -\Delta I_{u1} + 2\Delta I_{v1} - \Delta I_{w1} \\ 2\Delta I_{z1} &= -\Delta I_{u1} - \Delta I_{v1} + 2\Delta I_{w1} \end{aligned}$$

The sum of all current differences gives three-phase estimates out of the injections, corresponding to the three phases of a rotating anisotropy vector. For numerical simplicity, all $\Delta I_{xyz}$ sums are here multiplied by a factor of two. This allows the anisotropy vector components to be calculated without any multiplications, but only by summing terms and/or shift operations.

$$\Delta u = \sum_{i=1}^{3} 2\Delta I_{xi} = +2\Delta I_{u1} - \Delta I_{v1} - \Delta I_{w1} - \Delta I_{u2} - \Delta I_{v2} + 2\Delta I_{w2} - \Delta I_{u3} + 2\Delta I_{v3} - \Delta I_{w3}$$

$$\Delta v = \sum_{i=1}^{3} 2\Delta I_{yi} = -\Delta I_{u1} + 2\Delta I_{v1} - \Delta I_{w1} + 2\Delta I_{u2} - \Delta I_{v2} - \Delta I_{w2} - \Delta I_{u3} - \Delta I_{v3} + 2\Delta I_{w3}$$

$$\Delta w = \sum_{i=1}^{3} 2\Delta I_{zi} = -\Delta I_{u1} - \Delta I_{v1} + 2\Delta I_{w1} - \Delta I_{u2} + 2\Delta I_{v2} - \Delta I_{w2} + 2\Delta I_{u3} - \Delta I_{v3} - \Delta I_{w3}$$

The a and b components of the anisotropy vector can now be determined by applying the Clarke transform.

$$\Delta b = \sqrt{3} \; (\Delta v - \Delta w)$$

$$\Delta a = 2\Delta u - \Delta v - \Delta w$$

Assuming that the rotor anisotropy is sinusoidally distributed, $\Delta a$ and $\Delta b$ exhibit a sine and cosine oscillation, and the anisotropy angle can be calculated as

$$\theta_{rotor} = \frac{1}{2} \cdot \text{atan} \; \frac{\Delta b}{\Delta a}$$

which is the basis for subsequent rotor position detection.

Equivalent to the 3-pulse method, a sequence of 6-injection vectors of the same magnitude but with different orientation also allows to construct a high frequency carrier. The carrier may typically revolve at 2fsw/6 (one injection per modulation half period) or fsw/6 (one injection per modulation period) and is demodulated, so that each one of the 6-injection vectors $U_1$, $U_2$, $U_3$, $U_4$, $U_5$, $U_6$ contributes to the measurement of anisotropy components, as it is shown in fig. 2. For mathematical simplicity, it is again convenient to represent the injection voltages and current differences using three-phase vectors in terms of the phases U, V, and W.

The injection magnitude $u_{inj}$ defines the length of the six vectors

$$U_1 = u_{inj} \begin{bmatrix} 1 \\ 0 \\ 0 \end{bmatrix} \, , \; U_2 = u_{inj} \begin{bmatrix} 1 \\ 1 \\ 0 \end{bmatrix} , \; U_3 = u_{inj} \begin{bmatrix} 0 \\ 1 \\ 0 \end{bmatrix}$$

$$U_4 = u_{inj} \begin{bmatrix} 0 \\ 1 \\ 1 \end{bmatrix} \, , \; U_5 = u_{inj} \begin{bmatrix} 0 \\ 0 \\ 1 \end{bmatrix} , \; U_6 = u_{inj} \begin{bmatrix} 1 \\ 0 \\ 1 \end{bmatrix}$$

The measured phase current differences $\Delta I_{uvw}$ from the rotating injection vector are demodulated using a three phase rotation matrix

$$\Delta I_{xyz} = \begin{pmatrix} \cos(\varphi) & \cos(\varphi - \dfrac{4\pi}{3}) & \cos(\varphi - \dfrac{2\pi}{3}) \\ \cos(\varphi - \dfrac{2\pi}{3}) & \cos(\varphi) & \cos(\varphi - \dfrac{4\pi}{3}) \\ \cos(\varphi - \dfrac{4\pi}{3}) & \cos(\varphi - \dfrac{2\pi}{3}) & \cos(\varphi) \end{pmatrix} \cdot \Delta I_{uvw}$$

For six different injection voltages $U_1$, $U_2$, $U_3$, $U_4$, $U_5$, $U_6$ corresponding matrix results are obtained as followed:

$U_1 (\varphi=0):$

$$\Delta I_{xyz1} = \begin{pmatrix} 1 & -1/2 & -1/2 \\ -1/2 & 1 & -1/2 \\ -1/2 & -1/2 & 1 \end{pmatrix} \Delta I_{uvw1} \Rightarrow \begin{aligned} 2\Delta I_{x1} &= +2\Delta I_{u1} - \Delta I_{v1} - \Delta I_{w1} \\ 2\Delta I_{y1} &= -\Delta I_{u1} + 2\Delta I_{v1} - \Delta I_{w1} \\ 2\Delta I_{z1} &= -\Delta I_{u1} - \Delta I_{v1} + 2\Delta I_{w1} \end{aligned}$$

$U_2 (\varphi=pi/3):$

$$\Delta I_{xyz2} = \begin{pmatrix} 1/2 & -1 & 1/2 \\ 1/2 & 1/2 & -1 \\ -1 & 1/2 & 1/2 \end{pmatrix} \Delta I_{uvw2} \Rightarrow \begin{aligned} 2\Delta I_{x2} &= +\Delta I_{u2} - 2\Delta I_{v2} + \Delta I_{w2} \\ 2\Delta I_{y2} &= +\Delta I_{u2} - \Delta I_{v2} - 2\Delta I_{w2} \\ 2\Delta I_{z2} &= -2\Delta I_{u2} + \Delta I_{v2} + \Delta I_{w2} \end{aligned}$$

$U_3 (\varphi=2pi/3):$

$$\Delta I_{xyz3} = \begin{pmatrix} -1/2 & -1/2 & 1 \\ 1 & -1/2 & -1/2 \\ -1/2 & 1 & -1/2 \end{pmatrix} \Delta I_{uvw3} \Rightarrow \begin{aligned} 2\Delta I_{x3} &= -\Delta I_{u3} - \Delta I_{v3} + 2\Delta I_{w3} \\ 2\Delta I_{y3} &= +2\Delta I_{u3} - \Delta I_{v3} - \Delta I_{w3} \\ 2\Delta I_{z3} &= -\Delta I_{u3} + 2\Delta I_{v3} - \Delta I_{w3} \end{aligned}$$

$U_4 (\varphi=pi):$

$$\Delta I_{xyz4} = \begin{pmatrix} -1 & 1/2 & 1/2 \\ 1/2 & -1 & 1/2 \\ 1/2 & 1/2 & -1 \end{pmatrix} \Delta I_{uvw4} \Rightarrow \begin{aligned} 2\Delta I_{x4} &= -2\Delta I_{u4} + \Delta I_{v4} + \Delta I_{w4} \\ 2\Delta I_{y4} &= +\Delta I_{u4} - 2\Delta I_{v4} + \Delta I_{w4} \\ 2\Delta I_{z4} &= +\Delta I_{u4} + \Delta I_{v4} - 2\Delta I_{w4} \end{aligned}$$

$U_5 (\varphi=4pi/3):$

$$\Delta I_{xyz5} = \begin{pmatrix} -1/2 & 1 & -1/2 \\ -1/2 & -1/2 & 1 \\ 1 & -1/2 & -1/2 \end{pmatrix} \Delta I_{uvw5} \Rightarrow \begin{aligned} 2\Delta I_{x5} &= -\Delta I_{u5} + 2\Delta I_{v5} - \Delta I_{w5} \\ 2\Delta I_{y5} &= -\Delta I_{u5} - \Delta I_{v5} + 2\Delta I_{w5} \\ 2\Delta I_{z5} &= +2\Delta I_{u5} - \Delta I_{v5} - \Delta I_{w5} \end{aligned}$$

$U_6 (\varphi=5pi/3):$

$$\Delta I_{xyz6} = \begin{pmatrix} 1/2 & 1/2 & -1 \\ -1 & 1/2 & 1/2 \\ 1/2 & -1 & 1/2 \end{pmatrix} \Delta I_{uvw6} \Rightarrow \begin{aligned} 2\Delta I_{x6} &= +\Delta I_{u6} + \Delta I_{v6} - 2\Delta I_{w6} \\ 2\Delta I_{y6} &= -2\Delta I_{u6} + \Delta I_{v6} + \Delta I_{w6} \\ 2\Delta I_{z6} &= +\Delta I_{u6} - 2\Delta I_{v6} + \Delta I_{w6} \end{aligned}$$

The sum of all current differences again gives six phase estimates out of the injections, corresponding to the three phases of a rotating anisotropy vector. For numerical simplicity all $\Delta I_{xyz}$ sums are here multiplied by a factor of two. This allows the anisotropy components to be calculated without any multiplications, but only by simple summing terms and/or shift operations (in case of a multiplication by the factor two).

$$\Delta u = \sum_{i=1}^{6} 2\Delta I_{xi} = +2\Delta I_{u1} - \Delta I_{v1} - \Delta I_{w1} + \Delta I_{u2} - 2\Delta I_{v2} + \Delta I_{w2} + \ldots$$

$$-\Delta I_{u3} - \Delta I_{v3} + 2\Delta I_{w3} - 2\Delta I_{u4} + \Delta I_{v4} + \Delta I_{w4} + \ldots$$

$$-\Delta I_{u5} + 2\Delta I_{v5} - \Delta I_{w5} + \Delta I_{u6} + \Delta I_{v6} - 2\Delta I_{w6}$$

$$\Delta v = \sum_{i=1}^{6} 2\Delta I_{yi} = -\Delta I_{u1} + 2\Delta I_{v1} - \Delta I_{w1} + \Delta I_{u2} + \Delta I_{v2} - 2\Delta I_{w2} + \dots$$

$$+2\Delta I_{u3} - \Delta I_{v3} - \Delta I_{w3} + \Delta I_{u4} - 2\Delta I_{v4} + \Delta I_{w4} + \dots$$

$$-\Delta I_{u5} - \Delta I_{v5} + 2\Delta I_{w5} - 2\Delta I_{u6} + \Delta I_{v6} + \Delta I_{w6}$$

$$\Delta w = \sum_{i=1}^{6} 2\Delta I_{zi} = -\Delta I_{u1} - \Delta I_{v1} + 2\Delta I_{w1} - 2\Delta I_{u2} + \Delta I_{v2} + \Delta I_{w2} + \dots$$

$$-\Delta I_{u3} + 2\Delta I_{v3} - \Delta I_{w3} + \Delta I_{u4} + \Delta I_{v4} - 2\Delta I_{w4} + \dots$$

$$+2\Delta I_{u5} - \Delta I_{v5} - \Delta I_{w5} + \Delta I_{u6} - 2\Delta I_{v6} + \Delta I_{w6}$$

The sine and cosine terms of the anisotropy vector can again be calculated by applying the Clarke transform.

$$\Delta b = \sqrt{3}\,(\Delta v - \Delta w)$$

$$\Delta a = 2\Delta u - \Delta v - \Delta w$$

Assuming a sinusoidally distributed rotor anisotropy, the rotor angle can be directly calculated from the three phase quantities using

$$\theta_{rotor} = \frac{1}{2} \cdot \text{atan}\ \frac{\Delta b}{\Delta a}$$

Without loss of generality the six pulses must not be produced one after another as

$$U = [U_1, U_2, U_3, U_4, U_5, U_6]$$

but can be arranged in an arbitrary order, e.g. as

$$U = [U_1, U_3, U_5, U_4, U_6, U_2]$$

which corresponds to the generation of two small triangles as shown in fig. 3.

This again allows for the simplified calculation using faster summing terms $\Delta u_{135}$, $\Delta v_{135}$ and $\Delta w_{135}$ for $U_1$, $U_3$ and $U_5$

$$\Delta u_{135} = +2\Delta I_{u1} - \Delta I_{v1} - \Delta I_{w1} - \Delta I_{u3} - \Delta I_{v3} + 2\Delta I_{w3} - \Delta I_{u5} + 2\Delta I_{v5} - \Delta I_{w5}$$

$$\Delta v_{135} = -\Delta I_{u1} + 2\Delta I_{v1} - \Delta I_{w1} + 2\Delta I_{u3} - \Delta I_{v3} - \Delta I_{w3} - \Delta I_{u5} - \Delta I_{v5} + 2\Delta I_{w5}$$

$$\Delta w_{135} = -\Delta I_{u1} - \Delta I_{v1} + 2\Delta I_{w1} - \Delta I_{u3} + 2\Delta I_{v3} - \Delta I_{w3} + 2\Delta I_{u5} - \Delta I_{v5} - \Delta I_{w5}$$

as well as $\Delta u_{246}$, $\Delta v_{246}$ and $\Delta w_{246}$ for $U_2$, $U_4$ and $U_6$

$$\Delta u_{246} = +\Delta I_{u2} -2\Delta I_{v2} +\Delta I_{w2} -2\Delta I_{u4} +\Delta I_{v4} +\Delta I_{w4} +\Delta I_{u6} +\Delta I_{v6} -2\Delta I_{w6}$$

$$\Delta v_{246} = +\Delta I_{u2} +\Delta I_{v2} -2\Delta I_{w2} +\Delta I_{u4} -2\Delta I_{v4} +\Delta I_{w4} -2\Delta I_{u6} +\Delta I_{v6} +\Delta I_{w6}$$

$$\Delta w_{246} = -2\Delta I_{u2} +\Delta I_{v2} +\Delta I_{w2} +\Delta I_{u4} +\Delta I_{v4} -2\Delta I_{w4} +\Delta I_{u6} -2\Delta I_{v6} +\Delta I_{w6}$$

which are dealt equivalently to the summing terms from the 3-pulse method described above. The advantage of subdividing the hexagon into two triangles makes the anisotropy measurement twice as accurate, while maintaining the same bandwidth for the field oriented control (FOC).

The results from the 3-pulse and 6-pulse methods can be extended to create a high-precision method for anisotropy analysis. That is, with n triangle injections, measurement noise additionally decreases by a factor $1/n$. The maximum FOC bandwidth however remains constant, because the triangle shape guarantees that the total injection always returns to its origin after every three samples.

The only remaining restriction for the measurement accuracy is the changing rotor position. Since the injection method assumes a constant rotor position, the precision of the averaging result depends on the output frequency. It is therefore possible to derive an averaging method, which uses a minimum of $n_{min}$ triangles based on an estimated output frequency $f_{out}$ of the rotor. Having one injection per modulation period, the triangle period $3/f_{sw}$ can be referred to a chosen maximum error $e_{max}$. Hence, it can be said:

$$n_{min} = \frac{f_{sw}}{3 \cdot f_{out}} \cdot e_{max}$$

That is, as an inherent property, the method becomes more accurate the slower the rotor moves.

As an example, for a maximum error of one mechanical degree $e_{max} = 1/360$, $f_{sw} = 8$ kHz, and $f_{out} = 1$ Hz. $n_{min}$ can be estimated to

$$n_{min} \approx 7.4$$

This means, with at least seven triangles used to average the resulting anisotropy vectors, the error introduced by the real rotor movement of 1 Hz (or 60 rpm) is less than one degree. At 30 rpm it is already possible to use 14 triangles to detect the rotor position with same positioning error, making the averaging twice as accurate.

It should be borne in mind that the bandwidth of the FOC is not affected by the larger averaging time, because the rotor position can be assumed as constant, while the FOC still acts with a bandwidth up to $f_{sw}/3$. As mentioned above, since the anisotropy vector in the three-phase domain is given by simple summing terms, it can quite easily be realized using an electronic hardware circuit or a programmable logic device.

The programmable logic device can run under a programme for identifying the magnetic anisotropy of an electric rotary field machine comprising a rotor and a stator, the computer program comprising computer executable instructions for controlling a programmable processor to setting injection pulses of equal absolute values during an injection interval, detecting a respective current response in form of current difference vectors, and determining the anisotropy from the voltage vectors and current difference vectors, wherein injection pulses in the three-phase domain are used.

**Claims**

1. Method for identifying the magnetic anisotropy of an electric rotary field machine comprising a rotor and a stator, the method comprising the steps of setting voltage vector ($U_1$, $U_2$, $U_3$) injection pulses of equal absolute values during an injection interval, detecting a respective current response in form of current difference vectors, and determining the anisotropy from the voltage vectors ($U_1$, $U_2$, $U_3$) and current difference vectors, wherein voltage vector ($U_1$, $U_2$, $U_3$) injection pulses in the three-phase domain are used and the current difference vectors are demodulated using a three-phase rotation matrix,
**characterized in that** three-phase rotation matrix is defined as

$$\begin{pmatrix} \cos(\varphi) & \cos(\varphi - \frac{4\pi}{3}) & \cos(\varphi - \frac{2\pi}{3}) \\ \cos(\varphi - \frac{2\pi}{3}) & \cos(\varphi) & \cos(\varphi - \frac{4\pi}{3}) \\ \cos(\varphi - \frac{4\pi}{3}) & \cos(\varphi - \frac{2\pi}{3}) & \cos(\varphi) \end{pmatrix}$$

wherein the angle $\varphi$ is chosen such that the three-phase rotation matrix comprises only values of $\pm 1$ and $\pm 1/2$.

2. Method according to claim 1, **characterized in that** the number of the voltage vectors ($U_1$, $U_2$, $U_3$) in the three-phase domain is n*3, wherein n is a positive integer.

3. Method according to claim 2, **characterized in that** n is chosen depending on a predetermined error $e_{max}$

$$n = \frac{f_{sw}}{3 * f_{out}} e_{max}$$

wherein $f_{out}$ is an output frequency of the rotor and $f_{sw}$ is a modulation frequency.

4. Method according to any of claims 1-3, **characterized in that** the voltage vectors ($U_1$, $U_2$, $U_3$) and the current difference vectors in three-phase domain is determined using an electronic hardware circuit or a programmable logic device.

5. A non-volatile computer readable medium encoded with a computer program for identifying the magnetic anisotropy of an electric rotary field machine comprising a rotor and a stator, the computer program comprising computer executable instructions for controlling a programmable processor to:

setting voltage vector ($U_1$, $U_2$, $U_3$) injection pulses of equal absolute values during an injection interval, detecting a respective current response in form of current difference vectors, and determining the anisotropy from the voltage vectors ($U_1$, $U_2$, $U_3$) and current difference vectors, wherein voltage vector ($U_1$, $U_2$, $U_3$) injection pulses in the three-phase domain are used and the current difference vectors are demodulated using a three-phase rotation matrix, **characterized in that** the three-phase rotation matrix is defined by the matrix below, wherein the angle $\varphi$ is chosen such that the three-phase rotation matrix comprises only values of $\pm 1$ and $\pm 1/2$.

$$\begin{pmatrix} \cos(\varphi) & \cos(\varphi - \frac{4\pi}{3}) & \cos(\varphi - \frac{2\pi}{3}) \\ \cos(\varphi - \frac{2\pi}{3}) & \cos(\varphi) & \cos(\varphi - \frac{4\pi}{3}) \\ \cos(\varphi - \frac{4\pi}{3}) & \cos(\varphi - \frac{2\pi}{3}) & \cos(\varphi) \end{pmatrix}$$

**Patentansprüche**

1. Verfahren zur Identifizierung der magnetischen Anisotropie einer elektrischen Drehfeldmaschine, die einen Rotor und einen Stator umfasst, wobei das Verfahren die Schritte des Setzens von Spannungsvektor- ($U_1$, $U_2$, $U_3$)-Injektionsimpulsen mit gleichen Absolutwerten während eines Injektionsintervalls, des Erfassens einer jeweiligen Stromantwort in Form von Stromdifferenzvektoren, und das Bestimmen der Anisotropie aus den Spannungsvektoren ($U_1$, $U_2$, $U_3$) und Stromdifferenzvektoren umfasst, wobei Spannungsvektor-($U_1$, $U_2$, $U_3$) -Injektionsimpulse im Dreiphasenbereich verwendet werden und die Stromdifferenzvektoren unter Verwendung einer Dreiphasen-Drehungsmatrix demoduliert werden, **dadurch gekennzeichnet, dass**
die Dreiphasen-Drehungsmatrix definiert ist als

$$\begin{pmatrix} \cos(\varphi) & \cos\left(\varphi - \dfrac{4\pi}{3}\right) & \cos\left(\varphi - \dfrac{2\pi}{3}\right) \\ \cos\left(\varphi - \dfrac{2\pi}{3}\right) & \cos(\varphi) & \cos\left(\varphi - \dfrac{4\pi}{3}\right) \\ \cos\left(\varphi - \dfrac{4\pi}{3}\right) & \cos\left(\varphi - \dfrac{2\pi}{3}\right) & \cos(\varphi) \end{pmatrix}$$

wobei der Winkel $\phi$ so gewählt wird, dass die Dreiphasen-Drehungsmatrix nur Werte von $\pm 1$ und $\pm 1/2$ umfasst.

2. Verfahren nach Anspruch 1, **dadurch gekennzeichnet, dass** die Anzahl der Spannungsvektoren ($U_1$, $U_2$, $U_3$) im Dreiphasenbereich n*3 ist, wobei n eine positive ganze Zahl ist.

3. Verfahren nach Anspruch 2, **dadurch gekennzeichnet, dass** n in Abhängigkeit von einem vorbestimmten Fehler $e_{max}$

$$n = \frac{f_{sw}}{3 * f_{out}} e_{max}$$

gewählt wird, wobei $f_{out}$ eine Ausgangsfrequenz des Rotors und $f_{sw}$ eine Modulationsfrequenz ist.

4. Verfahren nach einem der Ansprüche 1-3, **dadurch gekennzeichnet, dass** die Spannungsvektoren ($U_1$, $U_2$, $U_3$) und die Stromdifferenzvektoren im Dreiphasenbereich unter Verwendung einer elektronischen Hardwareschaltung oder einer programmierbaren Logikvorrichtung bestimmt werden.

5. Nichtflüchtiges computerlesbares Medium, das mit einem Computerprogramm zum Identifizieren der magnetischen Anisotropie einer elektrischen Drehfeldmaschine, die einen Rotor und einen Stator umfasst, codiert ist, wobei das Computerprogramm computerausführbare Befehle zum Steuern eines programmierbaren Prozessors umfasst, zum: Setzen von Spannungsvektor- ($U_1$, $U_2$, $U_3$)-Injektionsimpulsen gleicher Absolutwerte während eines Injektionsintervalls, Erfassen einer jeweiligen Stromantwort in Form von Stromdifferenzvektoren und Bestimmen der Anisotropie aus den Spannungsvektoren ($U_1$, $U_2$, $U_3$) und Stromdifferenzvektoren, wobei Spannungsvektor- ($U_1$, $U_2$, $U_3$) -Injektionsimpulse im Dreiphasenbereich verwendet werden und die Stromdifferenzvektoren unter Verwendung einer Dreiphasenrotationsmatrix demoduliert werden, **dadurch gekennzeichnet, dass** die Dreiphasenrotationsmatrix durch die nachstehende Matrix definiert ist, wobei der Winkel $\phi$ so gewählt ist, dass die Dreiphasenrotationsmatrix nur Werte von $\pm 1$ und $\pm 1/2$ umfasst.

$$\begin{pmatrix} \cos(\varphi) & \cos\left(\varphi - \dfrac{4\pi}{3}\right) & \cos\left(\varphi - \dfrac{2\pi}{3}\right) \\ \cos\left(\varphi - \dfrac{2\pi}{3}\right) & \cos(\varphi) & \cos\left(\varphi - \dfrac{4\pi}{3}\right) \\ \cos\left(\varphi - \dfrac{4\pi}{3}\right) & \cos\left(\varphi - \dfrac{2\pi}{3}\right) & \cos(\varphi) \end{pmatrix}$$

**Revendications**

1. Procédé d'identification de l'anisotropie magnétique d'une machine électrique à champ tournant comprenant un rotor et un stator, le procédé comprenant les étapes d'établissement d'impulsions d'injection de vecteurs tension ($U_1$, $U_2$, $U_3$) d'égales valeurs absolues durant un intervalle d'injection, de détection d'une réponse en courant respective sous forme de vecteurs différence de courant, et de détermination de l'anisotropie à partir des vecteurs tension ($U_1$, $U_2$, $U_3$) et des vecteurs différence de courant, des impulsions d'injection de vecteurs tension ($U_1$, $U_2$, $U_3$) dans le domaine triphasé étant utilisées et les vecteurs différence de courant étant démodulés à l'aide d'une matrice de rotation triphasée,
   **caractérisé en ce que**
   la matrice de rotation triphasée est définie par

$$\begin{pmatrix} \cos(\varphi) & \cos(\varphi - \frac{4\pi}{3}) & \cos(\varphi - \frac{2\pi}{3}) \\ \cos(\varphi - \frac{2\pi}{3}) & \cos(\varphi) & \cos(\varphi - \frac{4\pi}{3}) \\ \cos(\varphi - \frac{4\pi}{3}) & \cos(\varphi - \frac{2\pi}{3}) & \cos(\varphi) \end{pmatrix}$$

   l'angle $\varphi$ étant choisi de sorte que la matrice de rotation triphasée ne contienne que des valeurs $\pm 1$ et $\pm 1/2$.

2. Procédé selon la revendication 1, **caractérisé en ce que** le nombre des vecteurs tension ($U_1$, $U_2$, $U_3$) dans le domaine triphasé est n*3, n étant un entier positif.

3. Procédé selon la revendication 2, **caractérisé en ce que** n est choisi en fonction d'une erreur prédéterminée $e_{max}$

$$n = \frac{f_{sw}}{3 * f_{out}} e_{max}$$

   $f_{out}$ représentant une fréquence de sortie du rotor et $f_{sw}$ représentant une fréquence de modulation.

4. Procédé selon l'une quelconque des revendications 1 à 3, **caractérisé en ce que** les vecteurs tension ($U_1$, $U_2$, $U_3$) et les vecteurs différence de courant dans le domaine triphasé sont déterminés à l'aide d'un circuit matériel électronique ou d'un dispositif logique programmable.

5. Support non volatile lisible par ordinateur codé avec un programme d'ordinateur destiné à identifier l'anisotropie magnétique d'une machine électrique à champ tournant comprenant un rotor et un stator, le programme d'ordinateur comprenant des instructions exécutables par ordinateur destinées à commander à un processeur programmable de : établir des impulsions d'injection de vecteurs tension ($U_1$, $U_2$, $U_3$) d'égales valeurs absolues durant un intervalle d'injection, détecter une réponse en courant respective sous forme de vecteurs différence de courant, et déterminer l'anisotropie à partir des vecteurs tension ($U_1$, $U_2$, $U_3$) et des vecteurs différence de courant, des impulsions d'injection de vecteurs tension ($U_1$, $U_2$, $U_3$) dans le domaine triphasé étant utilisées et les vecteurs différence de courant étant démodulés à l'aide d'une matrice de rotation triphasée, **caractérisé en ce que** la matrice de rotation triphasée est définie par la matrice ci-dessous, l'angle $\varphi$ étant choisi de sorte que la matrice de rotation triphasée ne contienne que des valeurs $\pm 1$ et $\pm 1/2$.

$$\begin{pmatrix} \cos(\varphi) & \cos\left(\varphi - \dfrac{4\pi}{3}\right) & \cos\left(\varphi - \dfrac{2\pi}{3}\right) \\ \cos\left(\varphi - \dfrac{2\pi}{3}\right) & \cos(\varphi) & \cos\left(\varphi - \dfrac{4\pi}{3}\right) \\ \cos\left(\varphi - \dfrac{4\pi}{3}\right) & \cos\left(\varphi - \dfrac{2\pi}{3}\right) & \cos(\varphi) \end{pmatrix}$$

Fig. 1

Fig. 2

Fig. 3

**EP 3 591 833 B1**

**Patent documents cited in the description**

- WO 2017045810 A1
- EP 2290807 A2
- WO 2004023639 A1